# EUROPEAN PATENT SPECIFICATION

(11) **EP 0 718 569 B1**
(45) Date of publication and mention of the grant of the patent: **12.04.2000**
(21) Application number: 95119999.1
(22) Date of filing: 18.12.1995
(51) Int. Cl.: F25B 41/06, B21K 1/20

(54) **Thermostatic expansion valve**
Thermostatisches Expansionsventil
Vanne de détente thermostatique

(30) Priority: 22.12.1994 JP 32074294; 30.06.1995 JP 16600195
(43) Date of publication of application: 26.06.1996
(60) Divisional application: 99115137.4
(73) Proprietor: Fujikoki Mfg. Co., Ltd., Tokyo (JP)
(72) Inventor: Watanabe, Kazuhiko, Setagaya-ku, Tokyo (JP); Watanabe, Chiharu, Toyohashi-shi, Aichi-ken (JP)
(74) Representative: Modiano, Guido, Dr.-Ing.

(56) References cited:
- GB-A- 930 725
- US-A- 5 303 864

## Description

### BACKGROUND OF THE INVENTION

### Field of the Invention

This invention relates to a thermostatic expansion valve for use in refrigerating systems of car air conditioners.

### Description of the Prior Art

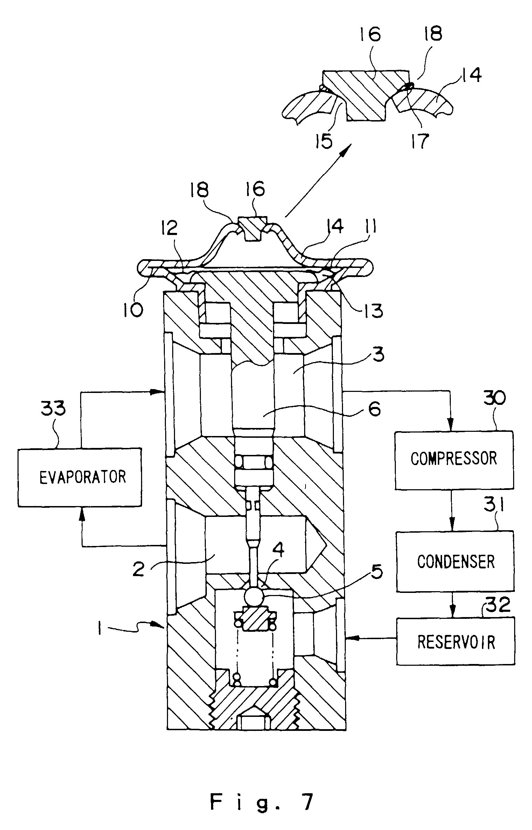

Fig. 7 shows a conventional thermostatic expansion valve according to the preamble of claim 1. Such a valve is to be located in a refrigerating cycle of a car air conditioner or the like. The thermostatic expansion valve comprises: a valve shell 1 including a high-pressure refrigerant passage 2 through which liquid refrigerant to be reduced in pressure travels and a low-pressure refrigerant passage 3 through which vapor-phase refrigerant travels, and having a valve hole 4 formed midway of the high-pressure refrigerant passage 2; a valve member 5 disposed to move to and away from the valve hole 4 to change the opening rate of the valve hole 4; a pressure-operating housing 10 including a diaphragm 11 for driving the valve member 5 through a driving rod 6 to control movements of the valve member 5 and an air-tight chamber 12 partitioned by the diaphragm 11 and filled with heat-sensitive gas, and mounted on the valve shell 1 to detect the temperature of gaseous-phase refrigerant; a plug member 16 for shutting an outer wall opening 15 provided in an outer wall 14 of the pressure-operating housing 10 after heat-sensitive gas is fully introduced into the air-tight chamber 12 through the outer wall opening 15.

Reference numeral 30 refers to a compressor connected to the outlet of the low-pressure refrigerant passage 3; 31 to a condenser connected to the compressor 30; 32 to a reservoir connected to the condenser 31 and to the inlet of the high-pressure refrigerant passage 2; and 33 to an evaporator connected to the outlet of the high-pressure refrigerant passage 2 and to the inlet of the low-pressure refrigerant passage 3.

In the conventional thermostatic expansion valve shown above, the plug member 16 is typically fixed to the housing outer wall 14 through contact and projection and solder welding between a tapered surface of the plug member 16 and the top surface of the housing outer wall 14 around the opening 15 as shown in Fig. 7. This aspect of fixture, however, inevitably produces a cavity 18 around the projection welding shown at 17, which permits water (condensed moisture, for example) to rest there and causes corrosion of the housing outer wall 14.

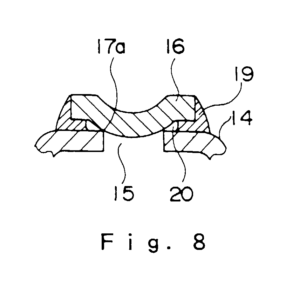

In the conventional method of Japanese laid-open patent publication No. H6-185833 of fixing the plug member 16 to the housing outer wall 14, as shown in Fig. 8, a portion of the spherical surface of the plug member 16 in direct contact with the opening edge of the housing outer wall 14 is secured thereto by projection welding, and the flange portion of the plug member 16 is fixed to the housing outer wall 14 by a solder-welding portion 19 so as to seal the opening 15. In this method, the projection welding is used only for provisional fixture of the plug member 16, and the seal of the opening 15 is established by the soldering 19. Therefore, the projection welding often fails to make an alloy along the entire circumference of the opening 15 and causes an insufficient strength. Moreover, the solder often fails to extend to the projection welding portion 17a, which, as found by the inventors of the present invention, makes a hollow 20 between the projection welding portion 17a and the solder-welding portion 19 and causes internal corrosion due to residual flux.

### OBJECT OF THE INVENTION

It is therefore an object of the invention to provide a thermostatic expansion valve in which the seal of an opening in a housing outer wall by a plug member can reliably be established only by projection welding and which is free from corrosion of the housing outer wall around the projection welding.

### SUMMARY OF THE INVENTION

According to the invention, there is provided a thermostatic expansion valve, as defined in claims 1-11.

In order to reliably seal the opening 15 of the housing outer wall by the plug member 16 fixed there by projection welding alone, contacting surfaces of the plug member 16 and the peripheral edge of the opening 15 of the housing outer wall 14 are preferably tapered and projection-welded, the length of the projection welding portion 17 preferably ranges from 0.2 mm to 1.5 mm, and the cavity 18 made around the projection welding portion 17 and otherwise causing corrosion of the housing outer wall 14 is filled with the anti-corrosive material 21 to water-tightly protect the projection welding portion.

In the thermostatic expansion valve according to the invention, which is made by projection welding, the contact surfaces of plug member 16 and the peripheral edge of the opening in the housing outer wall 14 and by applying the anti-corrosive material to cover the projection welding portion 17, the seal of the opening 15 in the housing outer wall 14 by the plug member 16 can reliably be established only by projection welding, no water resides around the projection welding portion 17 on the housing outer wall 14, and corrosion of the outer wall 14 at the projection welding with the plug member can reliably prevented by the anti-corrosive material 21.

### BRIEF DESCRIPTION OF THE DRAWING

Fig. 1 is a central, longitudinal, cross-sectional view of a thermostatic expansion valve according to a first embodiment of the invention;
Fig. 2 is a fragmentary, enlarged, cross-sectional view showing a cavity defined on a modified thermostatic expansion valve with an elongated projection welding portion;
Fig. 3 is a fragmentary, cross-sectional view of a thermostatic expansion valve according to a second embodiment of the invention;
Fig. 4 is a fragmentary, cross-sectional view of a thermostatic expansion valve according to a third embodiment of the invention;
Fig. 5 is a fragmentary, cross-sectional view of a thermostatic expansion valve according to a fourth embodiment of the invention;
Fig. 6 is a fragmentary, cross-sectional view of a thermostatic expansion valve according to a fifth embodiment of the invention;
Fig. 7 is a fragmentary, cross-sectional view of a conventional thermostatic expansion valve with a different structure for enclosure of heat-sensitive gas; and
Fig. 8 is a central, longitudinal, cross-sectional view of another conventional thermostatic expansion valve.

### DESCRIPTION OF THE PREFERRED EMBODIMENTS

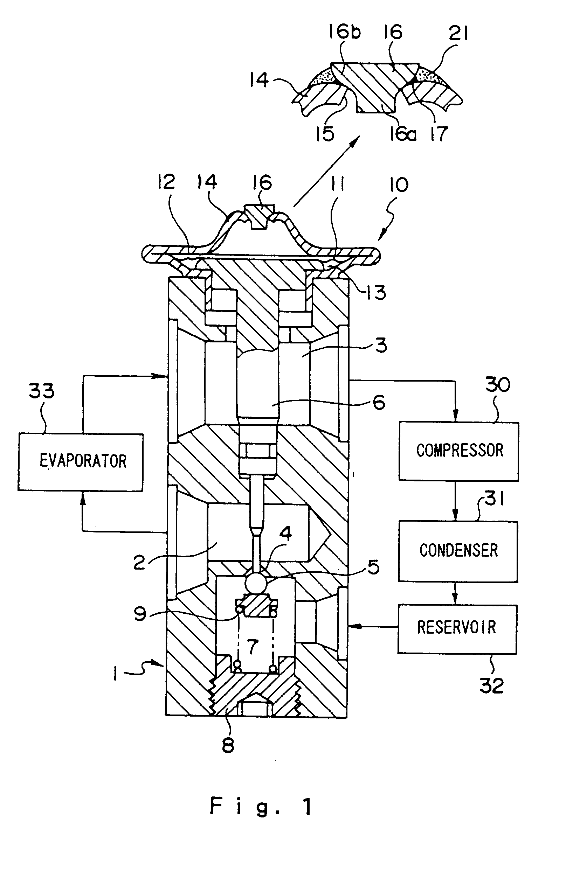

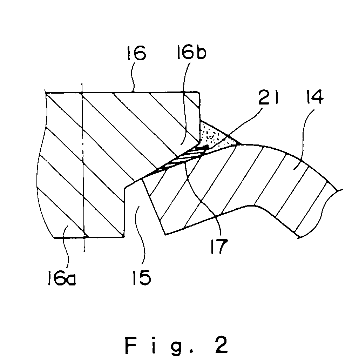

A first embodiment of the invention is explained below in detail with reference to Figs. 1 and 2.

In Figs. 1 and 2, reference numeral 1 denotes a shell of a thermostatic expansion valve to be located in a refrigerating cycle of a car air conditioner. The shell defines a high-pressure refrigerant passage 2 through which liquid refrigerant to be reduced in pressure travels, and a low-pressure refrigerant passage 3 through which gaseous-phase refrigerant travels. The high-pressure refrigerant passage 2 includes a valve hole 4 in the form of a small-diameter throttle hole midway thereof. Therefore, liquid refrigerant introduced into the high-pressure refrigerant passage 2 is adiabatically expanded when running through the valve hole 4 having a small passage area.

The inlet portion of the valve hole 4, from which the refrigerant enter the valve hole 4, defines a valve seat which permits a ball-shaped valve member 5 tightly fits to or move away from it. The valve member 5 is supported by a ball carrier 7, and biased to the shutting direction (the direction for pressing the valve member 5 to the valve seat of the valve hole 4) by a compression coil spring 9 interposed between the ball carrier 7 and an adjusting nut 8.

Numeral 10 denotes a pressure-operating housing mounted on the upper end of the valve shell 1 to detect the temperature of gaseous-phase refrigerant. The pressure-operating housing 10 includes a diaphragm 11 for driving the valve member 5 through a driving rod 6, an air-tight chamber 12 to be filled with heat-sensitive gas, and an equalizing chamber 13 partitioned from the air-tight chamber 12 by the diaphragm and communicating with the low-pressure refrigerant passage 3.

The housing 10 includes an outer wall 14 having an opening 15 which is sealed by a metallic plug member 16 after a gas-filled state of the air-tight chamber 12 is established by introducing heat-sensitive gas through the opening 15.

Therefore, the air-tight chamber 12 detects the temperature of the gaseous-phase refrigerant which flows through the low-pressure refrigerant passage 3, and varies in pressure with changes in temperature of the gaseous-phase refrigerant. On the other hand, since the equalizing chamber 13 located downstream of the diaphragm 11 and communicating with the low-pressure refrigerant passage 3 exhibits the same pressure as that of the gaseous-phase refrigerant flowing in the low-pressure refrigerant passage 3. Therefore, the diaphragm 11 is moved by the difference between the air-tight chamber 12 and the equalizing chamber 13, and transfer the movement to the valve member 5 through the driving rod 6 to control the opening rate of the valve hole 4.

As shown in the enlarged fragmental portion of Fig. 1 and in Fig. 2, the plug member 16 includes a projection 16a to be inserted in the opening 15 of the housing outer wall 14, and a conical portion 16b having a funnel-shaped lateral surface which extends with an angle of about 90 degrees to 120 degrees and contacts with the edge of the opening 15 in the housing outer wall 14 (which is also funnel-shaped so as to slope down with a tapering angle of about 120 degrees toward the center of the opening 15). These tapered contact portions of the conical portion 16b and the peripheral edge of the opening 15 of the housing outer wall 14 are joined by projection welding over the length of 0.2 mm to 1.5 mm. As a result, the opening 15 of the housing outer wall 14 is sealed by the projection welding alone and maintains the gas-filled status of the air-tight chamber 12.

In this status, a cavity exists around the projection welding portion 17 on the housing outer wall 14 as shown in Figs. 1 and 2, and unless removed, it will cause corrosion of the housing outer wall 14. In the present invention, therefore, an anticorrosive material 21, such as adhesive or the like, is applied to the cavity to remove space around the welding portion of the plug member 16 such that water cannot enter or remain there. In other aspects, the thermostatic expansion valve according to the embodiment is the same as the conventional expansion valve shown in Fig. 7. The same or equivalent elements are therefore designated with the same reference numerals as used in Fig. 7, and their detailed explanation is omitted.

Enclosure of heat-sensitive gas within the air-tight chamber 12 in the housing 10 is performed by the method explained below. That is, the pressure-operating housing 10 including the driving rod 6 and the diaphragm 11 is sandwiched and fixed between a metallic lower block and a non-metallic upper block such that the opening 15 opens upward. Then the interior space of the upper block is evacuated to establish a nearly vacuum state in the air-tight chamber 12, and heat-sensitive gas is introduced to fill the air-tight chamber 12.

After that, a movable plunger in the upper block is pressed down to introduce the plug member 16 held by the plunger into the opening 15 until the conical portion 16b of the plug member 16 contacts with the peripheral edge of the opening in the housing outer wall 14. In this state, a voltage for projection welding is applied to the plunger and the lower block. As a result, the plug member 16 is fixed to the housing outer wall 14 by projection welding at their direct contact while keeping the gas-filled status of the air-tight chamber 12.

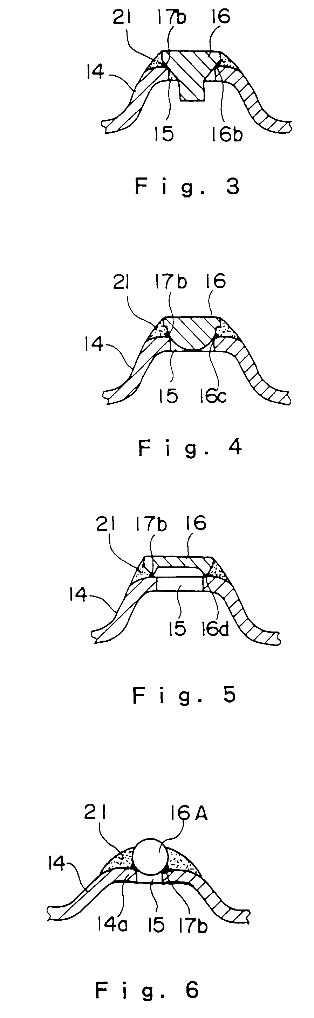

Fig. 3 shows a second embodiment of the invention. In this embodiment, the housing outer wall 14 includes a planar surface around the opening 15, and the taper angle of the conical portion 16b of the plug member 16 ranges from 90 degrees to 130 degrees. The conical portion 16b of the plug member 16 is fixed to the edge of the opening 15 by projection welding at the edge contact portion 17b, and an anti-corrosive material 21 is applied to fill the cavity 18 made around the projection welding 17b. Thus the portion around the welding portion is configured to prevent water from residing there.

Fig. 4 shows a third embodiment of the invention. In this embodiment, the housing outer wall 14 includes a planar surface around the opening 15. The spherical surface 16c of the plug member 16 is fixed to the edge of the opening 15 by projection welding at the edge contact portion 17b, and an anti-corrosive material 21 is applied to fill the cavity 18 made around the projection welding 17b. Thus the portion around the welding portion is configured to prevent water from residing there.

Fig. 5 shows a fourth embodiment of the invention. In this embodiment, the housing outer wall 14 includes a planar surface around the opening 15. An edge portion 16d of the plug member 16 is fixed to the planar portion around the opening 15 of the housing outer wall 14 at an edge contact portion 17b by projection welding. Then an anti-corrosive material 21 is applied to the cavity 18 made around the welding portion. Thus the portion around the welding portion is configured to prevent water from residing there.

Fig. 6 shows a fifth embodiment of the invention. In this embodiment, a ball-shaped plug member 16A, made of steel or stainless steel, is used and fixed to the housing wall 14 at the edge contact portion 17b by projection welding. The housing outer wall 14 around the opening 15 may be arcuated as shown at 14a to fittingly receive the ball 16A. An anti-corrosive material 21 is applied to water-tightly protect the welding portion 17b.

As described above, all thermostatic expansion valves according to the invention are made by fixing the plug member to the peripheral edge of the opening of the housing outer wall at the direct contact portion therewith by projection welding and then applying an anti-corrosive material to fill a cavity made around the welding portion. Therefore, the seal of the opening in the housing outer wall by the plug member can be reliably established only by projection welding. At the same time, it is prevented that water resides around the projection welding portion on the housing outer wall, and corrosion of the outer wall around the welding portion of the plug member can be reliably prevented.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A thermostatic expansion valve comprising: a housing (10) with an air-tight chamber (12) filled with a heat-sensitive gas, and a plug member (16) air-tightly sealing an opening (15) formed on the housing (10) and thus the air-tight chamber (12),
CHARACTERIZED IN THAT a peripheral portion of the opening (15) and the plug member (16) are welded solely by projection welding at a tapered contact portion thereof to form a projection weld (17), an anti-corrosive material (21) being provided to fill a cavity formed around the projection weld (17).

2. The thermostatic expansion valve according to claim 1, further comprising a valve member (5) for changing the opening rate of a valve hole (4) which controls the flow amount of refrigerant flowing into an evaporator in a refrigerating cycle,
the housing (10) being a pressure-operating housing comprising the air-tight chamber (12) air-tightly containing the heat-sensitive gas, so as to drive the valve member (5) in response to detection of the temperature of the refrigerant by the heat-sensitive gas,
the heat-sensitive gas being confined in the air-tight chamber (12) by the plug member (16).

3. The thermostatic expansion valve according to claim 2, further comprising:
a valve shell (1) defining a high-pressure refrigerant passage (2) through which liquid refrigerant to be reduced in pressure travels, and a low-pressure refrigerant passage (3) through which gaseous-phase refrigerant travels, the high-pressure refrigerant passage (2) including the valve hole (4) midway thereof;
the valve member (5) being moved to and away from the valve hole (4) of the valve shell (1) to change the opening rate of the valve hole (4);
the housing (10) containing a diaphragm (11) for driving the valve member (5) to control movements of the valve member (5), the diaphragm (11) dividing the interior of the housing (10) into the air-tight chamber (12) and an equalizing chamber (13) communicating with the low-pressure refrigerant passage (3), the housing (10) being attached to the valve shell (1) to detect the temperature of the gaseous-phase refrigerant;
the housing comprising an outer wall (14) in which the opening (15) is made, the plug member (16) sealing the opening (15) after heat-sensitive gas is introduced to fill the air-tight chamber (12).

4. The thermostatic expansion valve according to one or more of claims 1-3, wherein the length of the projection weld (17) ranges from 0.2 mm to 1.5 mm.

5. The thermostatic expansion valve according to one or more of claims 1-4, wherein the plug member (16) is formed of metal.

6. The thermostatic expansion valve according to one or more of claims 1-4, wherein the plug member (16) is formed of a metallic ball.

7. The thermostatic expansion valve according to one or more of claims 1-4, wherein the plug member (16) is a metallic ball which is welded to the peripheral edge of the opening (15) and partly covered by an anti-corrosive material (21) applied to the projection weld (17).

8. The thermostatic expansion valve according to one or more of claim 1-4, wherein the plug member (16) has a spherical surface which is welded to seal the opening (15).

9. The thermostatic expansion valve according to one or more of claim 1-8, wherein the tapered angle of a conical portion (16b) of the plug member (16) containing the tapered contact portion is approximately 90 to 120 degrees, and the length of the tapered contact portion is approximately 0.2 mm to 1.5 mm.

10. The thermostatic expansion valve according to claim 3 and one or more of claims 4-9, wherein the outer wall (14) is funnel-shaped.

11. The thermostatic expansion valve according to claim 3 and one or more of claims 4-8, wherein the tapered angle of a conical portion (16b) of the plug member (16) containing the tapered contact portion is approximately 90 to 130 degrees, and/or wherein the outer wall (14) includes a planar surface around the opening (15).

## Patentansprüche

1. Ein thermostatisches Expansionsventil, das folgendes umfaßt: ein Gehäuse (10) mit einer luftdichten Kammer (12), die mit einem wärmeempfindlichen Gas gefüllt werden kann; und ein Stöpselelement (16), das eine Öffnung (15), die im Gehäuse (10) gebildet ist, und solchermaßen auch die luftdichte Kammer (12) luftdicht abdichtet,
DADURCH GEKENNZEICHNET, DAß ein Randabschnitt der Öffnung (15) und das Stöpselelement (16) nur durch Buckelschweißen an einem konischen Kontaktabschnitt davon zusammengeschweißt sind, um eine Buckelschweißnaht (17) zu bilden, wobei ein antikorrosives Material (21) bereitgestellt wird, um einen um die Buckelschweißnaht (17) herum gebildeten Hohlraum (18) aufzufüllen.

2. Das thermostatische Expansionsventil nach Anspruch 1, das weiterhin ein Ventilelement (5) einschließt, das die Öffnungsgröße einer Ventilbohrung (4) ändert, die die in einem Kühlzyklus in einen Verdampfer einfließende Kühlmittelflußmenge regelt;
wobei das Gehäuse (10) aus einem Druckgehäuse besteht, das die luftdichte Kammer (12) umfaßt, die luftdicht das wärmeempfindliche Gas enthält, um das Ventilelement (5) als Reaktion auf die Erfassung der Temperatur des Kühlmittels durch das wärmeempfindliche Gas zu betreiben,
wobei das wärmeempfindliche Gas in der luftdichten Kammer (12) durch das Stöpselelement 16 eingeschlossen wird.

3. Das thermostatische Expansionsventil nach Anspruch 1, das weiterhin folgendes umfaßt:
ein Ventilmantel (1), der einen Hochdruck-Kühlmitteldurchgang (2) bestimmt, wodurch ein flüssiges Kühlmittel, dessen Druck zu reduzieren ist, durchfließt, und einen Niederdruck-Kühlmitteldurchgang (3), durch den das in der Gasphase befindliche Kühlmittel fließt, wobei der Hochdruck-Kühlmitteldurchgang (2) die Ventilbohrung (4) in seiner Mitte umfaßt;
wobei das Gehäuse (10) eine Membran (11) zum Antrieb des Ventilelements (5) umfaßt, um die Bewegungen des Ventilelements (5) zu steuern, wobei die Membran (11) das Innere des Gehäuses (10) in die luftdichte Kammer (12) und eine mit dem Niederdruck-Kühlmitteldurchgang (3) kommunizierende Ausgleichskammer (13) teilt, wobei das Gehäuse (10) am Ventilmantel (1) angebracht ist, um die Temperatur des in der gasförmigen Phase befindlichen Kühlmittels zu erfassen;
wobei das Gehäuse eine äußere Wand (14) umfaßt, in der die Öffnung (15) ausgebildet ist, worin das Stöpselelement (16) die Öffnung (15) abdichtet, nachdem ein wärmeempfindliches Gas eingeführt wird, um die Luftdichte Kammer (12) aufzufüllen.

4. Das thermostatische Expansionsventil nach einem oder mehreren der Ansprüche 1-3, worin die Länge der Buckelschweißnaht (17) zwischen 0,2 mm bis 1,5 mm liegt.

5. Das thermostatische Expansionsventil nach einem oder mehreren der Ansprüche 1-4, worin das Stöpselelement (16) aus Metall ausgebildet ist.

6. Das thermostatische Expansionsventil nach einem oder mehreren der Ansprüche 1-4, worin das Stöpselelement (16) aus einer metallischen Kugel ausgebildet ist.

7. Das thermostatische Expansionsventil nach einem oder mehreren der Ansprüche 1-4, worin das Stöpselelement (16) eine Metallkugel ist, die am Außenrand der Öffnung (15) geschweißt ist und teilweise von einem an der Buckelschweißnaht (17) eingesetzten antikorrosiven Material (21) abgedeckt ist.

8. Das thermostatische Expansionsventil nach einem oder mehreren der Ansprüche 1-4, worin das Stöpselelement (16) eine sphärische Fläche hat, die geschweißt ist, um die Öffnung (15) abzudichten.

9. Das thermostatische Expansionsventil nach einem oder mehreren der Ansprüche 1-8, worin der Kegelwinkel eines konischen Abschnitts (16b) des Stöpselelements (16), der den konischen Kontaktabschnitt umfaßt, etwa 90 bis 120 Grad hat, und worin die Länge des konischen Abschnitts von etwa 0,2 mm bis 1,5 mm reicht.

10. Das thermostatische Expansionsventil nach Anspruch 3 und einem oder mehreren der Ansprüche 4-9, worin die äußere Wand (14) trichterförmig ist.

11. Das thermostatische Expansionsventil nach Anspruch 3 und einem oder mehreren der Ansprüche 4-8, worin der Kegelwinkel eines konischen Abschnitts (16b) des Stöpselelements (16), der den konischen Kontaktabschnitt umfaßt, etwa 90 bis 130 Grad hat, und/oder worin die äußere Wand (14) eine ebene Fläche um die Öffnung (15) herum umfaßt.

## Revendications

1. Détendeur thermostatique comprenant: une boîte (10) contenant une chambre étanche à l'air (12) remplie d'un gaz thermosensible, et un bouchon (16) qui obture de manière étanche à l'air une ouverture (15) formée sur la boîte (10) et ainsi la chambre étanche à l'air (12),
caractérisé par le fait qu'une partie périphérique de l'ouverture (15) et le bouchon (16) sont soudés seulement par projection dans une partie de contact conique pour la formation d'une soudure par projection (17), une matière anticorrosion (21) étant prévue pour remplir une cavité formée autour de la soudure par projection (17).

2. Détendeur thermostatique selon la revendication 1, comprenant en outre un obturateur (5) pour changer le degré d'ouverture d'un trou de soupape (4) qui commande le débit de réfrigérant entrant dans un évaporateur d'une boucle frigorifique,
la boîte (10) étant une boîte fonctionnant sous pression qui comprend la chambre étanche à l'air (12) contenant de manière étanche à l'air le gaz thermosensible, afin de manoeuvrer l'obturateur (5) en réponse à la saisie de la température du réfrigérant par le gaz thermosensible,
le gaz thermosensible étant maintenu enfermé dans la chambre étanche à l'air (12) par le bouchon (16).

3. Détendeur thermostatique selon la revendication 2, comprenant en outre:
une enveloppe de soupape (1) formant un passage de réfrigérant à haute pression (2) par où passe du réfrigérant liquide dont la pression doit être réduite, et un passage de réfrigérant à basse pression (3) par où passe du réfrigérant en phase gazeuse, le passage de réfrigérant à haute pression (2) présentant le trou de soupape (4) à mi-chemin de celui-ci,
l'obturateur (5) étant approché et éloigné du trou de soupape (4) de l'enveloppe de soupape (1) pour changer le degré d'ouverture du trou de soupape (4),
la boîte (10) contenant une membrane (11) pour la manoeuvre de l'obturateur (5) pour la commande de mouvements de l'obturateur (5), la membrane (11) divisant l'intérieur de la boîte (10) en la chambre étanche à l'air (12) et une chambre d'égalisation (13) communiquant avec le passage de réfrigérant à basse pression (3), la boîte (10) étant jointe à l'enveloppe de soupape (1) pour saisir la température du réfrigérant en phase gazeuse,
la boîte comprenant une paroi extérieure (14) dans laquelle est faite l'ouverture (15), le bouchon (16) obturant l'ouverture (15) après que du gaz thermosensible a été introduit pour remplir la chambre étanche à l'air (12).

4. Détendeur thermostatique selon une ou plusieurs des revendications 1 à 3, dans lequel la longueur de la soudure par projection (17) est comprise entre 0,2 mm et 1,5 mm.

5. Détendeur thermostatique selon une ou plusieurs des revendications 1 à 4, dans lequel le bouchon (16) est formé de métal.

6. Détendeur thermostatique selon une ou plusieurs des revendications 1 à 4, dans lequel le bouchon (16) est formé d'une boule métallique.

7. Détendeur thermostatique selon une ou plusieurs des revendications 1 à 4, dans lequel le bouchon (16) est une boule métallique qui est soudée au bord périphérique de l'ouverture (15) et en partie couverte par une matière anticorrosion (21) appliquée sur la soudure par projection (17).

8. Détendeur thermostatique selon une ou plusieurs des revendications 1 à 4, dans lequel le bouchon (16) a une surface sphérique qui est soudée pour obturer l'ouverture (15).

9. Détendeur thermostatique selon une ou plusieurs des revendications 1 à 8, dans lequel l'angle de pente d'une partie conique (16b) du bouchon (16) contenant la partie de contact conique est approximativement de 90 à 120 degrés, et la longueur de la partie de contact conique est approximativement de 0,2 mm à 1,5 mm.

10. Détendeur thermostatique selon la revendication 3 et une ou plusieurs des revendications 4 à 9, dans lequel la paroi extérieure (14) est en forme d'entonnoir.

11. Détendeur thermostatique selon la revendication 3 et une plusieurs des revendications 4 à 8, dans lequel l'angle de pente d'une partie conique (16b) du bouchon (16) contenant la partie de contact conique est approximativement de 90 à 130 degrés, et/ou dans lequel la paroi extérieure (14) présente une surface plane autour de l'ouverture (15).
